# EUROPEAN PATENT APPLICATION

(11) **EP 1 056 026 A2**
(43) Date of publication of application: **29.11.2000**
(21) Application number: 00304260.3
(22) Date of filing: 19.05.2000
(51) Int. Cl.: G06F 17/50

(54) **System for evaluating designs**

(30) Priority: 30.08.1999 US 385351; 24.05.1999 US 317242
(71) Applicant: GENERAL ELECTRIC COMPANY, Schenectady, NY 12345 (US)
(72) Inventor: Brewer, Jason Thomas, Maineville, Ohio 45039 (US); Luffy, Ronald Jon, Loveland, Ohio 45140 (US); Luffy, Christine Maria, Loveland, Ohio 45140 (US); Salay, Charlotte Rhett, Loveland, Ohio 45140 (US); Vishnauski, Jon Michael, Loveland, Ohio 45140 (US); Younghans, James Leroy, Cincinnati, Ohio 45223 (US); Woodruff, Mark Richard, Loveland, Ohio 45140 (US); Wallace, Donald Richard, Milford, Ohio 45150 (US)
(74) Representative: Goode, Ian Roy

(57) **Abstract**

A computer implemented design evaluation system for evaluating a design. The system includes a type module (112) for receiving a user input specifying a design type and generating design requirements. A design module (114) receives the design requirements generates a design including design data. A performance module (118) receives the design data and generates performance parameters. A cost module (126) receives the design data and generates a cost. A customer value module (124) receives the performance parameters and generates a customer value for the design.

## Description

The invention relates to a system for evaluating a component design which allows a user to rapidly evaluate a design early in the design process. The design process continues to evolve due to the economic pressure of the marketplace as well as the necessity to more accurately define risk issues associated with a particular design. The design must meet guarantees to the purchaser and be capable of being developed to meet those guarantees for a definable and affordable level of expenditure. In the past, basic design type and specifications decisions were based on design-focused parameters. For example, in designing an aircraft engine, designers would focus on engine parameters such as weight. Performance criteria (i.e., how well the design meets customer expectations) would not be evaluated until further in the design process when changes to the design are costly. Accordingly, there is a perceived need in the art for a design system that will allow assessment of the effect of design variables during a preliminary design stage.

An exemplary embodiment of the invention is directed to a computer implemented design evaluation system for evaluating a design. The system includes a type module for receiving a user input specifying a design type and generating requirements. A design module receives the requirements and generates a design including design data. A performance module receives the design data and the design type and generates performance parameters. A cost module receives the design data and generates a cost. A customer value module receives the performance parameters and the cost and generates a customer value for the design.

Embodiments of the invention will now be described, by way of example, with reference to the accompanying drawings, in which:-
FIG. 1 is a block diagram of an engine design evaluation system in an exemplary embodiment of the invention;
FIG. 2 depicts use of the engine design evaluation system to perform a deterministic study;
FIG. 3 depicts a design space generated based on two control parameters;
FIG. 4 depicts placing constraints on the design space of FIG. 3;
FIG. 5 depicts an exemplary deterministic study;
FIG. 6 depicts use of the engine design evaluation system to perform a probabilistic study;
FIG. 7 depicts the result of using the engine design evaluation system to perform a robust design study; and
FIG. 8 is a block diagram of a design evaluation system in an exemplary embodiment of the invention.

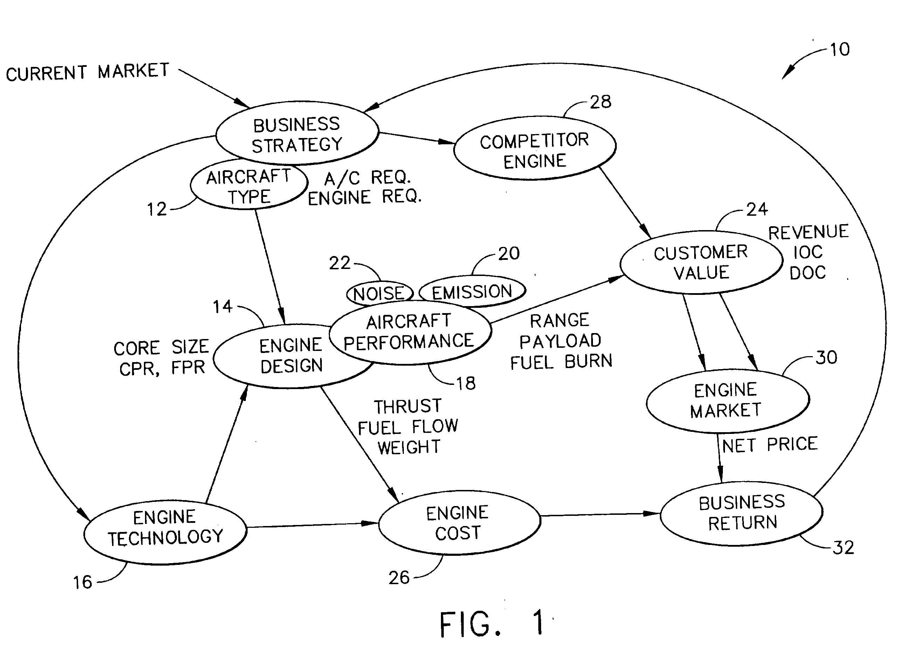

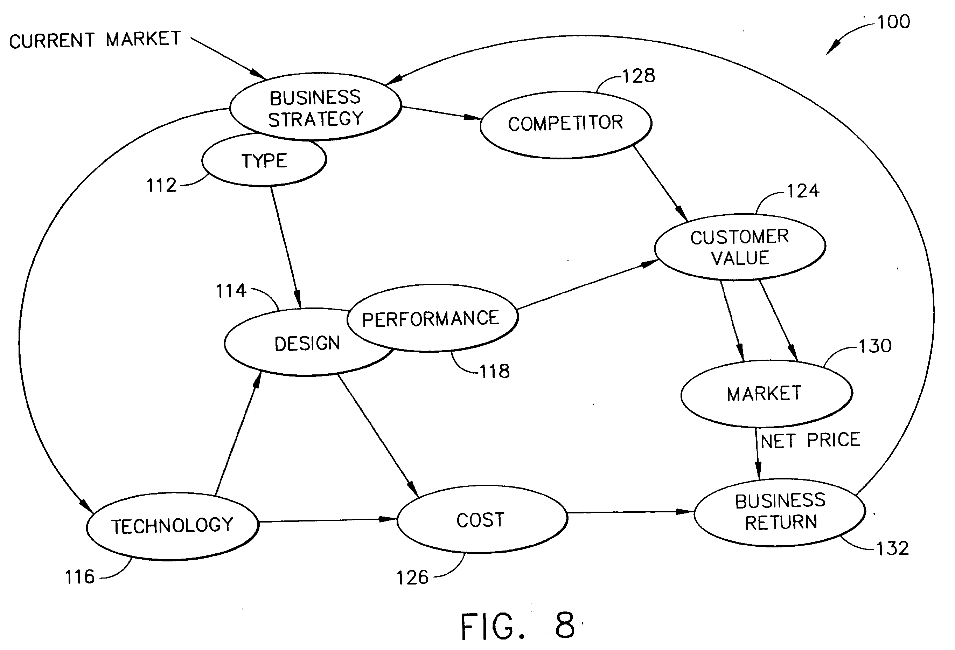

FIG. 1 is a block diagram of an engine design evaluation system shown generally at 10 in an exemplary embodiment of the invention. FIG. 1 depicts application of the invention to an engine design. As described below with reference to FIG. 8, the system can be applied to any type of design. The engine design evaluation system 10 is made up of a plurality of modules. The user can designate inputs for one or more modules and the modules generate outputs which are used by subsequent modules. The modules have varying degrees of sophistication or knowledge and are described in detail herein. The individual modules, and thus the entire system, may be implemented on a general purpose computer as described herein.

Referring to FIG. 1, an aircraft type module 12 is used to provide a mechanism for the user to enter the type of aircraft that the engine is to be used with. For example, the user may enter that the airframe is to be a Boeing 767 used for commercial passenger/cargo service. The aircraft type module 12 specifies requirements such as aircraft requirements and engine requirements depending on the user input. Aircraft requirements may include a variety of factors including range and payload. Engine requirements may include factors such as thrust and sizing constraints. The aircraft type module 12 may be implemented using a computer-implemented model. The user inputs the aircraft type and the model accesses and outputs data related to aircraft requirements and engine requirements.

An engine design module 14 receives the outputs from the aircraft type module 12 and allows the user to design an engine to meet the requirements established by the aircraft type module 12. The engine design module 14 allows the user to generate an engine design based on a plurality of considerations including, but not limited to, thermodynamic, aerodynamic, mechanical and electrical considerations. The engine design module 14 provides a rapid, consistent method for designing an engine to the specified requirements and design constraints. The detailed evaluation of the various considerations (e.g., thermodynamic considerations) at the part level enables the engine design module 14 to rapidly and consistently investigate changes in engine design requirements and constraints.

The engine design module 14 bases the engine design on the engine requirements received from the aircraft type module 12, such as thrust, as well as user input engine attributes, such as fan pressure ratio, overall pressure ratio, and limiting component temperatures. The engine design module 14 also receives input from an engine technology module 16. The engine technology module 16 contains data related to different engine technologies (e.g., systems, materials, control processes, etc). For example, the engine technology module 16 may contain data related to multiple engine cooling systems. When a user specifies a particular cooling system, the engine design module 14 accesses the engine technology module 16 to obtain data necessary to incorporate the specified cooling system in the existing design.

The engine design module 14 performs a thermodynamic analysis to provide factors such as engine pressures, temperatures, airflows and fuel flow throughout the engine for subsequent design analysis. The thermodynamic analysis uses the engine component aerodynamic design (fan, compressor, combustor, high and low pressure turbine, etc.) for efficiencies and off-design performance.

The aerodynamic component design is based on parametric component technology levels. The component technologies are characterized non-dimensionally to enable scaling the components to the appropriate size for the thrust requirements and overall engine thermodynamic attributes. The component representation provides the design and off-design efficiency and flow characteristics as a function of relevant physical parameters.

The aerodynamic and thermodynamic analysis provide the basis for the mechanical design of the propulsion system. The mechanical design evaluation includes items such as rotating and static structures for the engine and appropriate material selections. The design evaluation provides a consistent geometric representation that is used to estimate the engine weight. All controls, external configurations, and nacelle weights are included in the engine weight.

The engine design module 14 and engine technology module 16 may be implemented using a computer implemented engine design program. Such engine design programs are publicly available and include programs such as those available from Jack D. Mattingly.

Based on the engine design created by the user at the engine design module 14, engine data such as thrust, fuel flow and weight are defined. Engine data is provided to an aircraft performance module 18 which determines how the aircraft will perform. The aircraft performance module 18 uses engine data from the engine design module 14, such as thermodynamic data (thrust and fuel flow), propulsion system weight, and nacelle geometry data, to calculate aircraft performance. The information is integrated with previously defined aircraft characteristics (lift, drag, weights, etc.) from aircraft type module 12 to produce an aircraft model. The aircraft model is used to calculate aircraft performance, in terms of fuel burn, range, payload and flight time for various missions using typical mission profiles and reserve rules. In order to calculate these performance characteristics over a typical aircraft operation, a number of missions can be evaluated throughout the aircraft's flight envelope. The multiple missions give insight into how a specific engine design will perform throughout an aircraft's entire operation, rather than just one or two typical missions. The aircraft performance data is stored for analysis and is also used as an input to a customer value module 24.

The aircraft performance module 18 may be implemented using a computer implemented mission analysis program. The mission analysis program determines the aircraft performance by simulating a number of missions and generating aircraft performance characteristics such as range, payload and fuel burn. Such mission analysis programs are publicly available and include programs such as those available from DARcorporation.

Emission and noise data are also generated as part of the aircraft performance. The emissions and noise data may be generated using an emission module 20 and a noise module 22. The noise module 22 generates a noise estimate based on factors such as combustor noise, fan exhaust noise, fan inlet noise, jet noise (based on input from engine design module 14), and airframe noise (based on input from aircraft type module 12). The component noise levels are a function of elements such as relative aerodynamic, theromodynamic, and mechanical parameters as well as flights trajectories and certain airplane characteristics. The noise module 22 may be implemented using a computer implemented model which includes a set of response surface equations based on physics-based models.

The engine emissions module 20 predicts the emissions of hydrocarbons such as (HC), nitric oxide (NOx), and carbon monoxide (CO) and is driven by the engine cycle parameters at the operating conditions of the engine consistent with those used for certification. The emissions module 20 may be implemented using a computer implemented model. The model receives engine cycle parameters and outputs data related to engine emissions.

The engine design module 14 and engine technology module 16 provide input to an engine cost module 26. The engine cost module 26 determines cost factors such as development cost, manufacturing cost and maintenance cost for a specified engine design based on inputs from engine design module 14 and engine technology module 16. The development cost may be based on historic data and determines what portion of the engine is based on existing designs and what portion of the engine is based on new designs. The higher the percentage of the engine based on new designs, the higher the development cost. The manufacturing cost estimates may be based on an empirical model and account for component physical size and materials selected. The maintenance cost estimates may be related to manufacturing cost as well as engine usage severity. An engine maintenance model is included which calculates time between overhauls based on factors such as temperature levels for critical parts and the calculated deterioration rate of the engine. The engine cost module 26 may be implemented through a computer implemented program such as PRICE-H commercially available from Lockheed Martin.

A customer value module 24 receives the output of the aircraft performance module 18, the emissions module 20 and noise module 22. The customer value module 24 also receives maintenance cost from engine cost module 26 since the engine purchaser will typically bear the maintenance cost. The customer value module 24 may be based on typical direct operating cost (DOC), indirect operating cost (IOC) and interest methods. However, instead of analyzing these parameters over one mission, these costs may be calculated over the same mission mix specified in the aircraft performance module 18.

The user can also assign percentage weights to differing missions to reflect the importance of the mission to airline revenue. For example, a mission that is to be flown frequently would be assigned a higher weight than a mission to be flown rarely. This provides a more accurate representation of engine value to the customer.

Included with the costs is the overall investment that the airline would make to acquire the aircraft, which is broken into depreciation, financing, and insurance. In addition, the payload data calculated in the aircraft performance module is integrated with typical airline yield data to create a revenue for each mission. The payload provides revenue from either passengers or cargo, depending on the mission and load factors. These costs and revenues are integrated together over the entire mission mix to create an annual cash flow for the airline based on one aircraft in service. These annual cash flows are totaled for a typical service life (15-25 years) to determine an overall service life cash stream. Using a typical airline discount rate, the service life cash stream and investment undergoes a net present value (NPV) analysis to determine the overall value of the particular engine design being evaluated. An airline internal rate of return (IRR) is also calculated. Since the engine design evaluation system is set up as a modular system, this process of calculating customer value is repeated for each engine design, so that this metric can be used to find the best engine design space as viewed from the airline or customer viewpoint.

The customer value is useful in defining price strategy for engines which provide differences in customer value. If the end user derives a net benefit in profitability from one engine versus another, some amount of this benefit can be captured by the producers in either increased price, increased market share, or some combination of both. This information provides guidance to the propulsion manufacturer in selecting configurations which provide the most customer value as well as the ability to assess whether inclusion of additional technology is cost effective.

The customer value module 24 may be implemented using a computer implemented program which determines the operating costs referred to above and revenue. The methods for determining cost are known in the art and can be implemented in a computer program. The revenue is based on factors such as range, payload (passenger and cargo) and fuel burn values generated by aircraft performance module 18. Existing data is used to compute a revenue value based on these factors.

A competitor engine module 28 includes one or more competitor engines which are used to determine a competitor engine customer value. The competitor engine data is provided to customer value module 24 which determines competitor engine customer value. The competitor engine customer value is compared to the customer value derived at customer module 24 to derive a value difference. The competitor engine module 28 may be implemented by a computer program which stores performance and cost data (similar to that generated by aircraft performance module 18 and engine cost module 26) for each competitor engine. Factors such as performance and weight data for competitor engines can be estimated based on competitor data using existing engine design software. The competitor data may be generated as a separate process, stored by the system and accessed by the competitor module 28. The aircraft type designated at aircraft module 12 may be used to access the appropriate competitor engine data from competitor engine module 28.

An engine market module 30 receives the value difference from customer value module 24 and determines a sell price for the engine in order to capture a user defined market share. The engine market module 30 includes predictions of the types and quantities of engines that will be demanded in the future. The predicted market is based on the aircraft type specified at aircraft type module 12. The engine market module 30 may be implemented through an empirical, computer model which contains market data for a plurality of aircraft types. When the aircraft type is designated at aircraft type module 12, the engine market module 30 accesses the relevant market data.

Lastly, the price derived by the engine market module 30 and the development and production costs from engine cost module 26 are provided to a business return module 32. The business return module 32 determines the financial return by considering factors such as development cost, production cost net price and maintenance revenue (assuming the manufacturer services a percentage of the engines said). The return is determined over the life of the engine. As shown in FIG.1, the return may be used to influence business strategy. For example, it may be revealed that the return on engines for a first type of aircraft is always less than the return on engines for a second type of aircraft. This would drive the manufacturer to produce engines for the second type of aircraft. The business return module 32 may be implemented through a computer implemented model which determines business return by subtracting costs (such as development production, etc.) from revenues (such as price, maintenance revenue, etc.).

The engine design evaluation system 10 may also be implemented without use of competitor engine module 28. In this embodiment the user specifies the price to be charged for the engine. The engine market module 30 determines the amount of market share the engine design will capture at the specified price. The price and market share information is used by the business return module 32 to determine business return for the engine over the life of the engine.

The engine design evaluation system 10 of FIG. 1 may be used at the preliminary design level. It allows users to better understand parametrically which engine parameters and constraints have the biggest impact on engineering design decisions. The engine design evaluation system helps focus users in the right design space and to identify certain constraints and parameters that might not have been quantified. The engine design evaluation system provides valuable knowledge early in the design process in order to make better design decisions which will benefit the customer economically.

The engine design evaluation system 10 may be used in a number of design processes including deterministic design studies, probabilistic design studies and robust design studies. A description of each of these applications is provided herein. Deterministic studies primarily involve key control/design parameters, that is, variables that the user has the ability to vary such as fan pressure ratio (FPR), core pressure ratio (CPR), turbine rotor inlet temperature, cooling and material technology, etc. When performing a deterministic study, the user has the ability to determine the best possible engine design relative to several output parameters (i.e., fuel burn, design range, customer value, etc.).

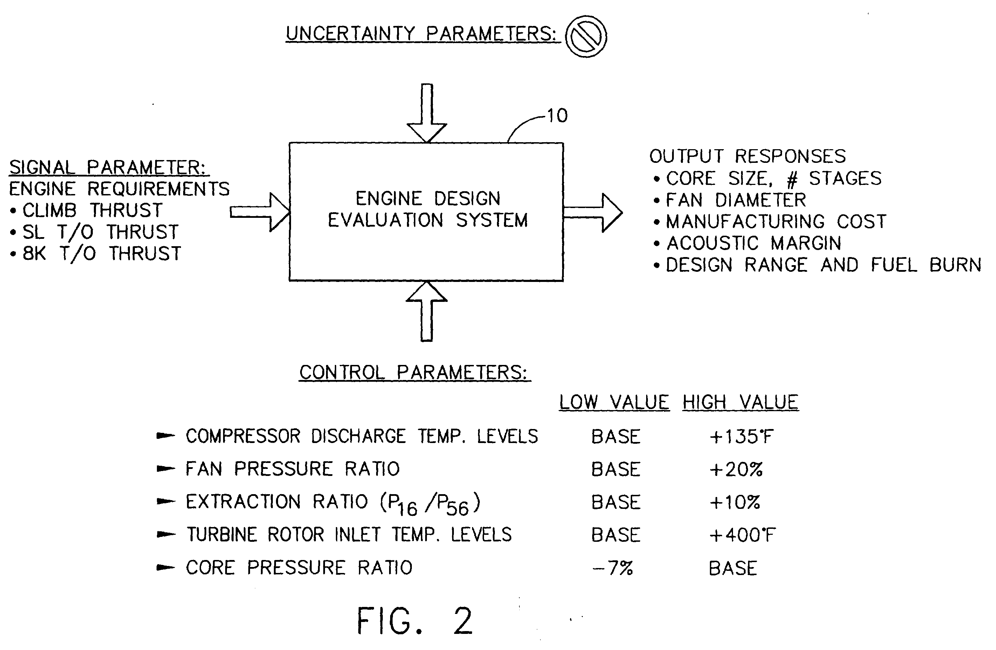

FIG. 2 depicts inputs and outputs of the engine design evaluation system 10 in an exemplary deterministic design study. As shown in FIG. 2, the engine design evaluation system 10 receives signal parameters specifying engine requirements including top of climb thrust, sea level take off (SL T/O) thrust and high altitude take off (8K T/O) thrust. The engine design evaluation system also receives control parameters which are parameters the user can alter and which the user wants to select in order to optimize one or more outputs. In a deterministic study, uncertainty parameters are not used. The goal is to evaluate how control parameters affect output parameters so that the user can optimize the control parameters. The engine design evaluation system generates outputs as a function of the control parameters to provide the user with a design space indicating the effect the control parameters have on one or more output parameters.

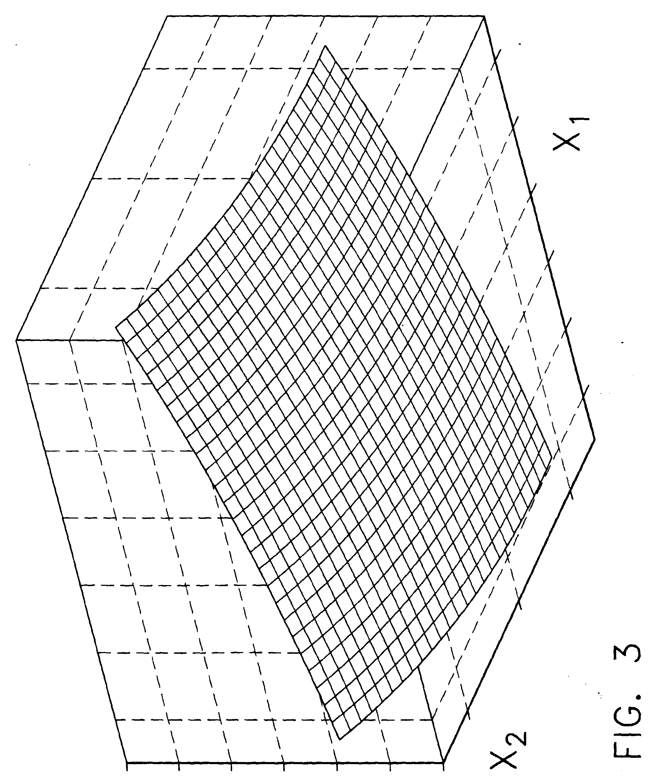

FIG. 3 shows an exemplary design space generated by the engine design evaluation system relating two control parameters X1 (FPR) and X2 (compressor discharge temperature) to fuel burn. By viewing the design space, the user can easily understand how changes in control parameters X1 and X2 effect fuel burn. FIG. 3 depicts the advantages of deterministic design versus conventional point design. Using point design, designers make design decisions by using historical trends as well as engineering expertise to determine a very limited number of point design engines to study. However, the engine designer is not able to visualize what takes place over the entire design space; only a few point designs represent the best possible engines within a given design space.

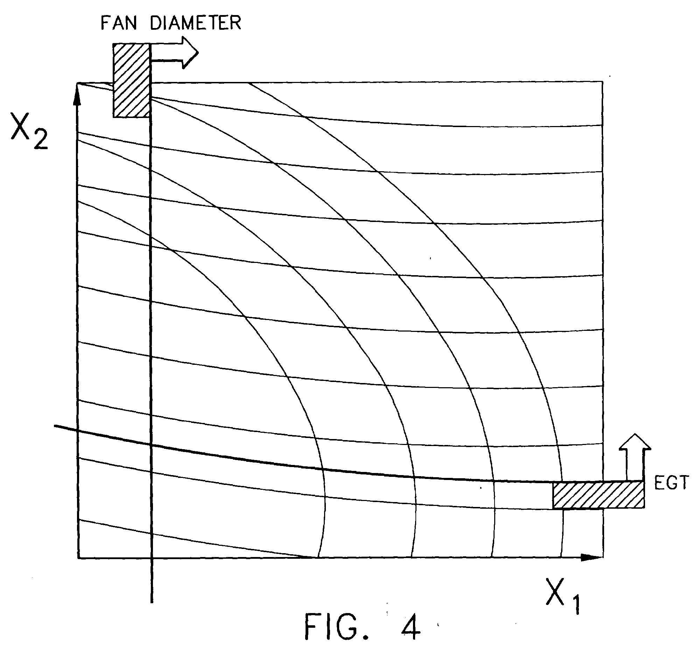

Deterministic design gives the user the ability to rapidly evaluate a large design space defined by control parameters. The user can also place constraints on control parameters as shown in FIG. 4 to help focus the user on the portion of the design space which can actually be implemented. This allows the user to gain insight into the effect of constraints which can result in either a re-evaluation of a constraint or a potential change in design. As a result, the deterministic study leads to a better understanding for future point design configurations.

The deterministic study is not limited to two control parameters. Any number of control parameters may be varied. A solver (e.g., an Excel solver) can be used to optimize one or more output parameters. For example, a design space relating all five control parameters shown in FIG. 2 to fuel burn can be generated. The solver can then find the values of the five control parameters that optimizes fuel burn, customer value, business return, etc.

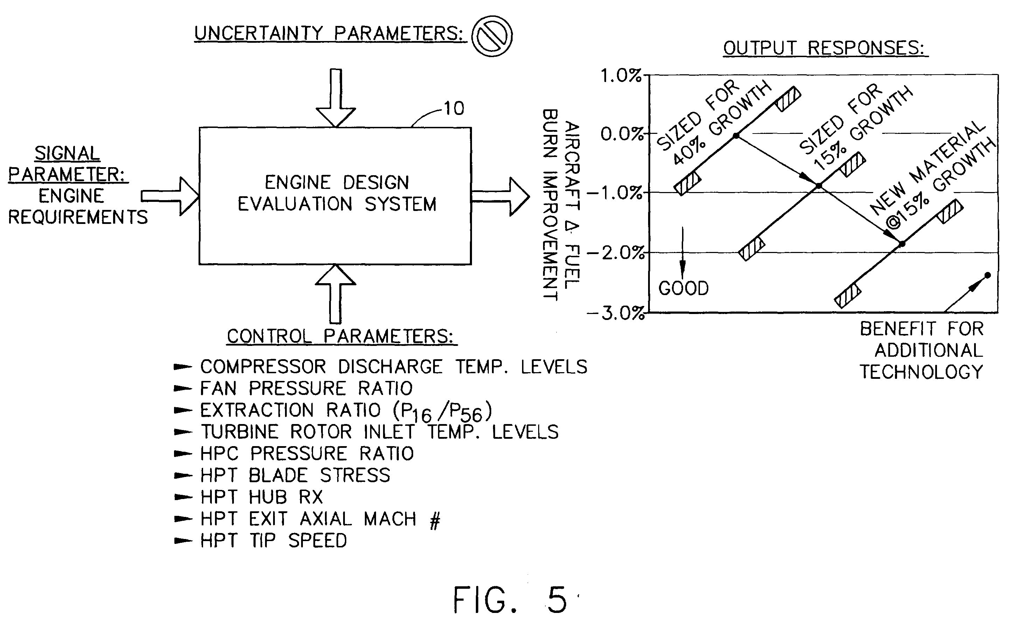

FIG. 5 illustrates an exemplary deterministic study that was conducted with the engine design evaluation system 10. Nine different control parameters were selected to be yaried in order to evaluate a large design space. The control parameters were constrained between predefined limits. A modified nine variable central composite design (CCD) design of experiments (DoE) was used in order to minimize the number of runs that have to be made in order to generate a response surface equation (RSE) for various output parameters. The use of the engine design evaluation system 10 makes evaluation of a large design space with numerous control parameters at the preliminary design level much faster.

The modified CCD DoE for the nine control parameters equates to 147 different runs. Generating 147 point design engines, evaluating the engine in an aircraft mission analysis program, and determining all of the relevant output parameters (fuel burn, acoustics, customer value, etc.) would take an enormous amount of time using conventional techniques. Using the engine design evaluation system, these cases were submitted overnight, and the results were available the next morning. Due to the rapid response of the engine design evaluation system, a user can evaluate the impact of many different design constraints and assumptions. The analysis of the component design provides insight into the constraints that were limiting additional performance benefits.

One output parameter shown in FIG. 5 is fuel burn improvement. Using the engine design evaluation system 10, a user was able to determine how different design constraints effect engine performance. A first constraint evaluated was maximum engine thrust growth (i.e., the amount of additional thrust that the engine design could accommodate with modifications). The engine design evaluation system 10 revealed tat designing an engine with less growth capacity resulted in improved fuel burn. By relaxing the maximum growth capacity from 40% to 15%, the fuel burn improves approximately 1%. In addition, the fan shaft torque and bearing speed were limiting factors. The engine design evaluation system 10 revealed that utilizing a new material for the fan shaft would improve fuel burn by an additional 1%.

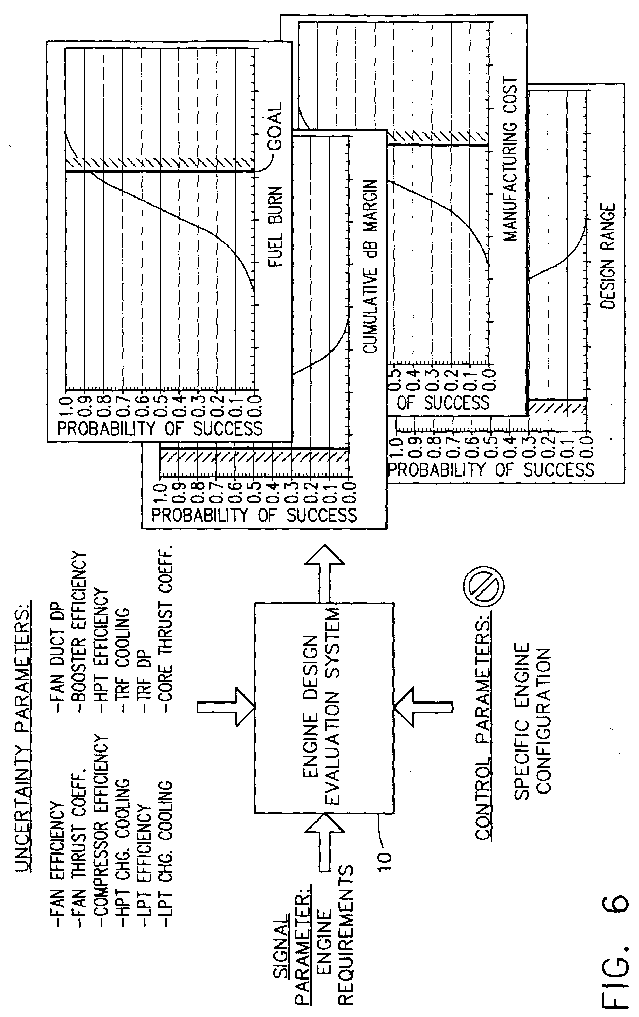

The engine design evaluation system may also be used in probabilistic studies to model uncertainty as shown in FIG. 6. As shown in FIG. 6, uncertainty parameters are applied to the engine design evaluation system 10. The control parameters are fixed for a specific engine design. This allows the user to observe the effects of uncertainty for a single engine design. Uncertainty is pervasive in the preliminary design process as a result of design requirements evolving as well as uncertainties associated with detailed aerodynamic and mechanical design execution of the engine components. This uncertainty is accounted for by assigning a statistical distribution to each uncertainty parameter and then utilizing Monte Carlo or equivalent techniques such as fast probabilistic integration (FPI) to generate probability distribution functions (PDF) or cumulative distribution functions (CDF) representing the probability an output parameter will meet system goals.

With the use of statistical analysis tools, the engine design evaluation system 10 has the ability to evaluate uncertainties and quantify the probability that output parameters will meet design requirements. Uncertainty parameters are variables that the user cannot reliably predict early in the design process (i.e. component efficiencies, cooling flows, etc.). This type of analysis allows the user to determine which uncertainty variables have the most effect on certain output parameters and to identify technology improvement programs. A CDF illustrates the probability of satisfying a specific goal from a specified set of engine control parameters.

FIG. 6 represents a specific engine configuration designed to a given set of engine requirements with the addition of engine uncertainty parameters. The outputs are presented in the form of CDFs. The plots provide a confidence level that an output parameter will meet a specified goal with the engine configuration subjected to the uncertainty parameter levels. For example, as shown in the example in FIG. 6, the probability of success of meeting the desired fuel burn goal for the specific engine configuration subjected to uncertainty is 85%.

The engine design evaluation system 10 may also be used to perform robust design studies. Robust engine design is the cumulative effect of deterministic design and probabilistic evaluation. In other words, a robust design study is executed in order to find the best possible engine configuration and evaluate the uncertainties associated with each engine configuration. The uncertainty analysis can also be used to determine the risk of violating a design limit or constraint. Robust design provides the opportunity to maximize the probability that an engine design satisfies the design constraints. This type of analysis enables the user to not only quantify the variation associated with the system outputs, but also the variation in the design constraints. The mean and standard deviation values of the output parameters of all the design combinations are fit in the form of RSE's. These RSE's are then subjected to constraints placed on the engine design. The user then has the ability to quantify the risk associated with the optimum deterministic design.

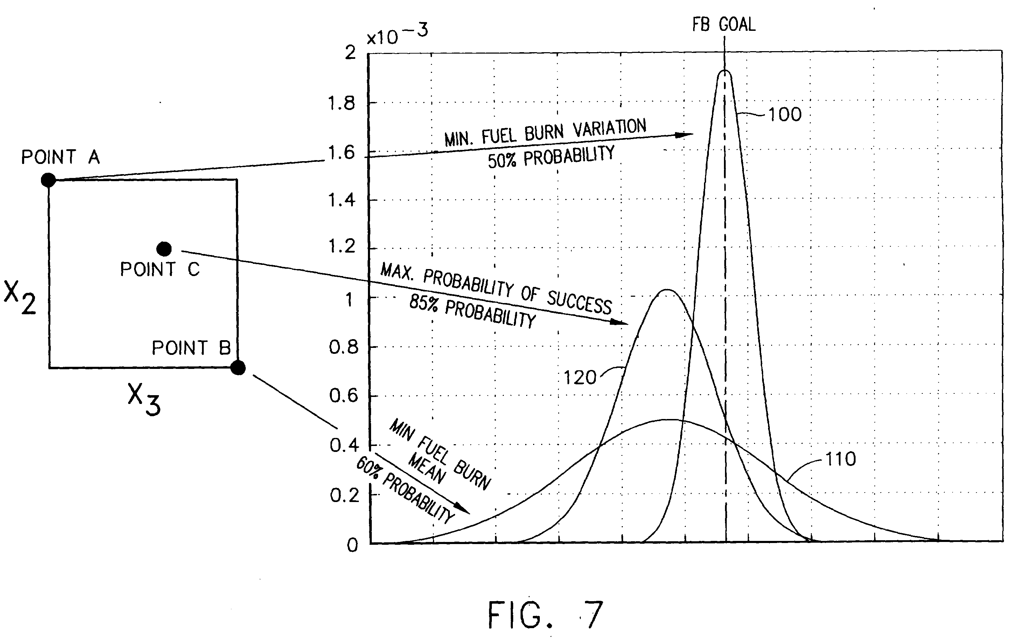

FIG. 7 illustrates the usefulness of robust design. FIG. 7 depicts a design space of compressor discharge temperature (X2) versus turbine rotor inlet temperature (X3). Three different points in the design space are studied. At point A, the standard deviation of the fuel burn is minimum indicating a minimum amount of variance in the design space. The range of fuel burn values at this location is shown as distribution 100. Only half of the distribution 100 meets the fuel burn goal (half of the distribution is to the left of the FB Goal). Accordingly, using minimum variance to select fuel burn results in an approximately 50% probability of achieving the fuel burn goal. At point B, the mean fuel burn is minimized. The range of fuel burn values at this location is shown as distribution 110. Distribution 110 has the largest variation within the design space and the probability of meeting the fuel burn goal is approximately 60 %, only marginally better than point A. Point C depicts the best robust solution. The range of fuel burn values at point C is represented by distribution 120. As shown in FIG. 7, approximately 85% of distribution 120 meets the fuel burn goal.

A 50% confidence level (realized at point A of the design space) represents a 50% risk of missing the design requirements. Missing the requirements results in redesign, retest, and re-certification or financial penalties related to warranties and concessions resulting in a possible delay of the engine into service introduction. The 85% confidence level (realized at point C of the design space) represents a 15% risk of missing the design requirements. Accordingly, by utilizing the engine design evaluation system 10 to perform a robust design study, the risk of missing the design constraint is reduced by a factor of more than three.

By using the engine design evaluation system to perform robust design studies, engine control parameters can be selected to maximize the probability of meeting design goals. In the example shown in FIG. 7, maximizing the probability of meeting the fuel burn goal did cause the nominal fuel burn, engine weight and engine cost to be negatively impacted only slightly (fractions of a percent). Additional risk reduction can be achieved by finding the confidence level where all the constraints converge to a single point. This is the lowest risk engine, i.e. has the lowest probability of failing to meet both design constraints and attributes that provide customer value.

The engine design evaluation system provides the user with a tool for assessing the quantitative effect of design decisions early in the design process. The system rapidly provides full, robust studies so the user can quickly make design decisions. As described above, the system quantifies uncertainty through the use of PDF's or CDF's and allows the user to generate designs with probability of success as a driving factor. The system is also parametric which allows the user to investigate an entire design space at a time instead of single point in the design space.

FIG. 8 depicts a design evaluation system 100 in an exemplary embodiment of the invention. The design evaluation system 100 may be applied to a variety of technologies and is not limited to aircraft engine design evaluation described above with reference to FIG. 1. The design evaluation system 100 is similar to that described with reference to FIG. 1 in that it is used to evaluate the design of a component (e.g., an engine) that is part of a system (e.g., an aircraft). An exemplary system/component combination which can be evaluated using the design evaluation system 100 is a locomotive/engine (diesel or gas). Additional system/component configurations include appliance/sub-system (where appliance refers to a broad class of consumer items including washers, dryers, refrigerators, VCR's, CD players, etc.), power plant/power generator (including steam turbines, turbine generators, etc.), computer/processor, transportation device/propulsion system and lightbulb/filament. It is understood that the above represent exemplary applications of the design evaluation system and are not intended to limit the application of the invention.

The system 100 includes modules similar to those described above with reference FIG. 1. A type module 112 allows the user to select an application. For example, if the user is designing an engine for a locomotive, the user can designate the type of locomotive. The type module 112 then generates requirements for the engine such a horsepower, fuel efficiency, etc.

A design module 114 receives the requirements from the type module 112 and allows the user to generate a design to meet the requirements established by the type module 112. Existing design programs may be used for the design module 114. The design module 114 also receives input from a technology module 116. The technology module 116 contains data related to different technologies. For example, if the system is used to design a cooling sub-system for a refrigerator, the technology module 116 may contain data related to different damper configurations (e.g., single or dual). When a user specifies a particular technology, the design module 114 accesses the technology module 116 to obtain data necessary to incorporate the specified technology in the existing design.

The design module 114 generates a design including design data. A performance module 118 uses design data from the design module 114 to calculate design performance. For example, if the design represents a cooling sub-system for use in a refrigerator, the performance module 118 may determine an efficiency rating for the refrigerator.

The cost module 126, customer value module 124, competitor module 128, market module 130 and business return module 132 operate in a manner similar to the engine cost module 26, the customer value module 24, competitor engine module 28, engine market module 30 and business return module 32, respectively, described above with reference to FIG. 1. The customer value module 124 may derive customer value based on known market expectations. For example, the customer value of a cooling sub-system for a refrigerator may be based on factors such as efficiency and mean time between failure. If the design is related to a filament for a lightbulb, customer value may be based on light intensity and life. The cost module 126, competitor module 128, market module 130 and business return module 132 operate in a manner similar to corresponding modules in FIG.1. As described above, the competitor module 128 and customer value module 124 are used to provide a value difference to market module 130. The market module can then generate a sales price for the component to capture a user-specified market share. The business return module 132 then determines return based on sales price and cost. The design evaluation system 100 can also operate without the competitor module 128 as described above with respect to engine design evaluation system 10.

As described above, the present invention can be embodied in the form of computer-implemented processes and apparatuses for practicing those processes. The present invention can also be embodied in the form of computer program code containing instructions embodied in tangible media, such as floppy diskettes, CD-ROMs, hard drives, or any other computer-readable storage medium, wherein, when the computer program code is loaded into and executed by a computer, the computer becomes an apparatus for practicing the invention. The present invention can also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

## Claims

1. A computer-implemented design evaluation system for evaluating a component design, the evaluation system comprising:
a type module (112) for receiving a user input specifying a design type and generating design requirements;
a design module (114) for receiving said design requirements, said design module generating a design including design data;
a performance module (118) for receiving said design data and generating performance parameters; and
customer value module (124) for receiving said performance parameters and generating a customer value for said design.

2. The system of claim 1 further comprising:
a competitor module (128) for generating cost and performance data related to a competitor design;
wherein said customer value module determines a competitor customer value based on the cost and performance data from the competitor module;
said customer value module further generating a value difference between the competitor customer value and the customer value.

3. The system of claim 2 further comprising:
a market module (130) for receiving said value difference and a desired market share, said market module determining a sell price for said design to obtain said desired market share.

4. The system of claim 3 further comprising:
a cost module (126) for receiving said design data and generating a cost; and
a business return module (132) for receiving said sell price and said cost and generating a business return for said design.

5. The system of claim 1 wherein:
said component is a propulsion system for use with a transportation device.

6. The system of claim 1 wherein:
said component is an engine for use with a locomotive.

7. The system of claim 1 wherein:
said component is a sub-system for use with an appliance.

8. The system of claim 1 wherein:
said component is a power generator for use in a power plant.

9. The system of claim 1 wherein:
said component is a processor for use in a computer.

10. The system of claim 1 wherein:
said component is a filament for use in a lightbulb.

11. A storage medium encoded with machine-readable computer program code for evaluating a component design, the storage medium including instructions for causing a computer to implement the evaluation system of any one of claims 1 to 10.
